# EUROPÄISCHE PATENTSCHRIFT

(11) **EP 2 603 393 B1**
(45) Veröffentlichungstag und Bekanntmachung des Hinweises auf die Patenterteilung: **12.07.2017**
(21) Anmeldenummer: 11722007.9
(22) Anmeldetag: 17.05.2011
(51) Int. Cl.: B60L 11/18, B62J 6/06, B62M 6/80, H01F 38/14

(54) **VORRICHTUNG ZUM BERÜHRUNGSLOSEN ÜBERTRAGEN VON ENERGIE AN EIN FAHRZEUG, FAHRZEUG UND VERWENDUNG EINER FELGE EINES FAHRZEUGES**
DEVICE FOR TRANSFERRING ENERGY TO A VEHICLE WITHOUT CONTACT, VEHICLE, AND USE OF A RIM OF A VEHICLE
DISPOSITIF DE TRANSFERT SANS CONTACT D'ÉNERGIE À UN VÉHICULE, VÉHICULE ET UTILISATION D'UNE JANTE D'UN VÉHICULE

(30) Priorität: 12.08.2010 DE 102010034175
(43) Veröffentlichungstag der Anmeldung: 19.06.2013
(73) Patentinhaber: SEW-EURODRIVE GmbH & Co. KG, 76646 Bruchsal (DE)
(72) Erfinder: SCHMIDT, Josef, 76676 Graben-Neudorf (DE); SCHWESINGER, Klaus, 76646 Bruchsal (DE)
(74) Vertreter: Tüngler, Eberhard
(86) Internationale Anmeldenummer: PCT/EP2011/002441
(87) Internationale Veröffentlichungsnummer: WO 2012/019664

(56) Entgegenhaltungen:
- EP-A1- 2 196 351
- WO-A1-2010/057799
- DE-A1- 19 824 290
- JP-A- 10 075 535
- US-A- 5 788 007
- US-A- 6 150 794
- US-A1- 2011 031 047

## Beschreibung

Die Erfindung betrifft eine Vorrichtung zum berührungslosen Übertragen von Energie an ein Fahrzeug und Verwendung einer Felge eines Fahrzeuges.

Es ist allgemein bekannt, Fahrzeuge mit einem aus einem Energiespeicher versorgbaren Elektroantrieb auszustatten.

Der Erfindung liegt daher die Aufgabe zugrunde, die Beladung von Elektrofahrzeugen weiterzubilden, insbesondere zu vereinfachen.

DE 19824290 offenbart leine Vorrichtung zum berührungslosen Übertragen von Energie an ein Fahrzeug.

Erfingdungsgemäß wird die Aufgabe bei der Vorrichtung nach den in Anspruch 1 und bei der Verwendung nach den in Anspruch 10 angegebenen Merkmalen gelöst.

Wichtige Merkmale der Erfindung bei der Vorrichtung zur berührungslosen Übertragung von Energie an ein Fahrzeug sind, dass ein Primärleiter induktiv gekoppelt zu einem ringförmigen Teil des Fahrzeugs anordenbar ist,
wobei das ringförmige Teil drehbar gelagert am Fahrzeug, insbesondere an dessen Rahmen, ist,
wobei am Fahrzeug eine Sekundärwicklung induktiv gekoppelt zu dem ringförmigen Teil angeordnet ist.

Von Vorteil ist dabei, dass der Sekundärwicklung Energie berührungslos übertragbar ist,
wobei ein ringförmiges Teil, vorzugsweise also die Felge eines Rades des Fahrzeuges, verwendbar ist, um die Energie von einem bodenverlegten, also stationären, Primärleiter zur Sekundärwicklung zu übertragen. Dabei ist die Sekundärwicklung in weitem Abstand zum Primärleiter anordenbar, beispielsweise am ringförmigen Teil gegenüberstehend, also in einem Umfangswinkel von mehr als 90°, insbesondere 180°.

Bei einer vorteilhaften Ausgestaltung ist in Umfangsrichtung des ringförmigen Teils zwischen dem Bereich der induktiven Kopplung an den Primärleiter und dem Bereich der induktiven Kopplung an die Sekundärwicklung mehr als 90° Umfangswinkel vorgesehen. Von Vorteil ist dabei, dass große Abstände zwischen Primärleiter und Sekundärwicklung vorsehbar sind.

Bei einer vorteilhaften Ausgestaltung ist das ringförmige Teil die Felge eines Rades, insbesondere des Hinterrades, des Fahrzeugs. Von Vorteil ist dabei, dass die Felge zum Durchleiten von elektrischem Strom verwendbar ist und außerdem der effektiv wirksame Luftspalt bei geeignet ferromagnetischem Material reduzierbar ist.

Bei einer vorteilhaften Ausgestaltung ist der Primärleiter um einen Spulenkern gewickelt vorgesehen und/oder die Sekundärwicklung um einen Spulenkern gewickelt vorgesehen. Von Vorteil ist dabei, dass ein verbesserter Wirkungsgrad bei der Übertragung erreichbar ist.

Bei einer vorteilhaften Ausgestaltung ist der Spulenkern U-förmig. Von Vorteil ist dabei, dass in dem durch die Beabstandung der Schenkel des U entstehenden Zwischenraum das ringförmige Teil, welches drehbar gelagert ist am Fahrzeug, also auch relativ zum Spulenkern, der am Fahrzeug befestigt ist, in diesem Zwischenraum vorsehbar ist.

Bei einer vorteilhaften Ausgestaltung weisen die Schenkel des U an ihren zueinander zugewandten Seitenflächen jeweils Erhebungen auf. Von Vorteil ist dabei, dass der Fluss zentrierbar ist und somit die Streuverluste verringerbar sind.

Bei einer vorteilhaften Ausgestaltung bestehen das ringförmige Teil aus einem elektrisch leitfähigen und ferromagnetischem Material. Von Vorteil ist dabei, dass der Feldfluss zwischen den Erhebungen durch das ringförmige Teil führbar ist und somit der effektiv wirksame Luftspalte verringerbar ist. Auf diese Weise ist ein hoher Wirkungsgrad erreichbar bei der Übertragung der elektrischen Leistung. Insbesondere ist der primärseitige und sekundärseitige Spulenkern entsprechend ähnlich gestaltbar und auf diese Weise eine kostengünstigere Herstellung durch größere Stückzahlen ermöglicht. Aber auch bei unterschiedlicher Ausführung der primärseitigen und sekundärseitigen Spulenkerne ist vorzugsweise der Luftspalt zwischen den Erhebungen gleich groß.

Bei einer vorteilhaften Ausgestaltung ist das ringförmige Teil mittels einer Mulde im Zwischenbereich zwischen den Schenkeln des U, insbesondere zwischen den an den Schekeln vorgesehenen Erhebungen, positionierbar. Von Vorteil ist dabei, dass im Boden eine Mulde, also Vertiefung, vorsehbar ist, so dass eine Positionierung des Fahrzeugs in der zum optimalen Wirkungsgrad zugehörigen Position des Fahrzeugs einfach ermöglicht ist. In dieser Position ist dann die Felge, insbesondere das ringförmige Teil, zwischen den Erhebungen des primärseitigen Spulenkerns angeordnet und ein hoher Wirkungsgrad erreichbar.

Bei einer vorteilhaften Ausgestaltung weist das Fahrzeug zumindest ein Rad auf, welches das ringförmige Teil aufweist. Von Vorteil ist dabei, dass beispielsweise das Hinterrad eines Fahrrades oder dergleichen das ringförmige Teil, wie Felge oder dergleichen, aufweist. Besonders einfach ist die Erfindung bei Speichenrädern anwendbar, da die Speichen zwar auch elektrisch leitfähig sind, aber mit einem elektrischen Übergangswiderstand mit der Felge verbindbar sind. Insbesondere ist sogar ein Isolator zwischenschaltbar, wie beispielsweise eine Kunststoffkappe zum Abdecken der in die Felge eingreifenden Spitzen der Speichen. Indem also ein elektrisches Isoliermittel zwischengeschaltet wird, ist einen weitere Reduktion der Verluste erreichbar.

Bei einer vorteilhaften Ausgestaltung ist das ringförmige Teil derart dünnwandig, dass seine Wandstärke in zu den Schenkeln paralleler Richtung kleiner als ein Fünftel, insbesondere kleiner als ein Zehntel, der Wandstärke in Achsrichtung des das ringförmige Teil umfassenden Rades des Fahrzeugs ist, insbesondere also in Verbindungsrichtung der Schenkel, insbesondere in Verbindungrichtung der Erhebungen. Von Vorteil ist dabei, dass Wirbelstromverluste reduziert sind.

Bei einer vorteilhaften Ausgestaltung ist die Felge mittels Speichen an einer am Fahrzeug, insbesondere am Rahmen des Fahrzeugs, drehbar gelagerten Nabe gehalten. Von Vorteil ist dabei, dass der Anteil der in die Speichen abfließenden Ströme relativ zum in der Felge in Umfangsrichtung fließenden Stromes gering ist. Somit ist ein hoher Wirkungsgrad erreichbar.

Bei einer vorteilhaften Ausgestaltung weist die Vorrichtung eine im Boden angeordnete derartige Mulde auf und der Primärleiter samt Spulenkern ist derart angeordnet, so dass bei Positionieren eines das ringförmige Teil aufweisenden Rades des Fahrzeuges in der Mulde die stärkste induktive Kopplung zwischen den Primärleiter und dem ringförmigen Teil erreicht wird. Von Vorteil ist dabei, dass das Fahrzeug automatisch oder mit nur geringer Fahrhilfe eingeparkt wird in die optimale Position. Ein Freischalten des Antriebs nach Erreichen der Mulde ist zum Erreichen der optimalen Position vorteilhaft.

Bei einer vorteilhaften Ausgestaltung weist die Vorrichtung eine im Boden angeordnete derartige Mulde auf und der Primärleiter ist um einen derartige angeordneten und ausgeführten Spulenkern mit Schenkeln gewickelt angeordnet, so dass bei Positionieren eines das ringförmige Teil aufweisenden Rades des Fahrzeuges in der Mulde der effektiv wirksame Luftspalt zwischen den Schenkeln reduziert wird mittels des ringförmigen Teils,
insbesondere wobei das Teil ferromagnetisch ist. Von Vorteil ist dabei, dass der Hauptfluss verbessert geführt ist und der Wirkungsgrad erhöht ist.

Bei einer vorteilhaften Ausgestaltung ist das ringförmige Teil zweistückig ausgeführt, indem ein ferromagnetischer Ring mit einer ringförmigen und/oder kreisförmigen elektrischen Leiterschleife, insbesondere Kupferleitung, verbunden ist. Von Vorteil ist dabei, dass eine einerseits der induzierte elektrische Strom in einfacher Weise geführt ist und gleichzeitig ein hoher Wirkungsgrad durch Verringerung der Streuverluste erreichbar ist.

Wichtige Merkmale bei dem Fahrzeug sind, dass es mit einem drehbar gelagerten ringförmigen Teil ausgestattet ist, wobei es insbesondere mit einem beladbaren Energiespeicher vorgesehen ist,
insbesondere für die Verwendung in einer Vorrichtung nach mindestens einem der vorangegangenen Ansprüche,
wobei am Fahrzeug, insbesondere am Rahmen des Fahrzeugs, eine Sekundärwicklung angeordnet ist, die induktiv gekoppelt ist mit dem ringförmigen Teil,
wobei das ringförmige Teil ferromagnetisch und elektrisch leitfähig ist, insbesondere wobei das ringförmige Teil aus einem ferromagnetischen Ring mit einer ringförmigen und/oder kreisförmigen elektrischen Leiterschleife, insbesondere Kupferleitung, zusammengesetzt ist.

Von Vorteil ist dabei, dass das Fahrzeug über das ringförmige Teil, also beispielsweise ein in einem Rad des Fahrzeuges vorgesehene Felge, einerseits nahe am Boden Energie aufnehmen und trotzdem die Sekundärwicklung weit vom Boden entfernt anordenbar ist. Somit ist die Sekundärwicklung geschützt vor wesentlicher Verschmutzung und dergleichen anbringbar. Zum Beladen muss der Bodenabstand der Sekundärwicklung nicht variiert werden.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:

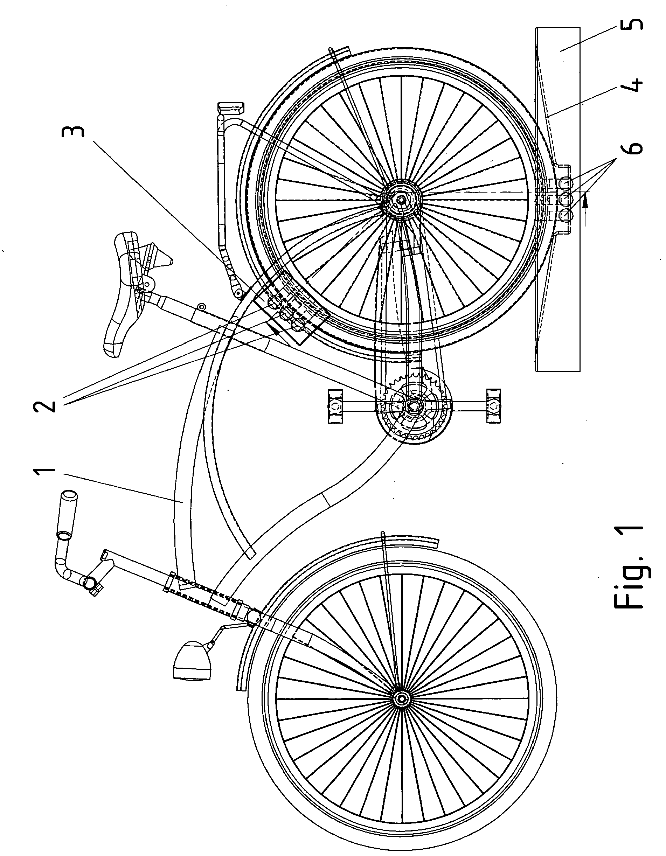

In der Figur 1 ist ein Fahrzeug als erstes erfindungsgemäßes Ausführungsbeispiel in Seitenansicht gezeigt, wobei teilweise angeschnitten dargestellt wurde. Dabei ist eine Energiequelle 6 und ein Aufnahmeeinrichtung 3 gezeigt.
In Figur 2 ist ein Schnitt durch einen Teilbereich der Energiequelle 6 gezeigt.
In Figur 3 ist ein Schnitt durch einen Teilbereich der Aufnahmeeinrichtung 3 gezeigt.

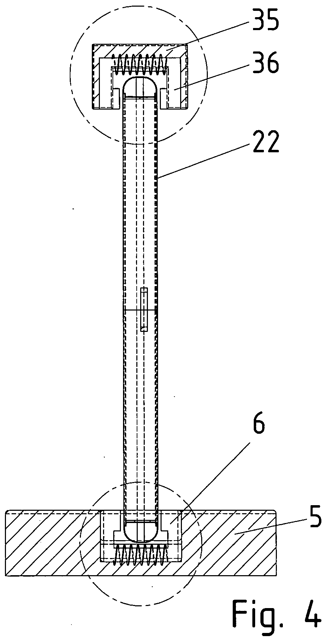

In der Figur 4 ist das berührungslose Energieübertragungssystem für das Fahrzeug näher dargestellt.

Das Fahrzeug ist beispielsweise ein Zweirad und weist elektrische Verbraucher auf, wie beispielsweise elektrisch betreibbare Leuchtmittel, Lampen oder einen Elektromotor als elektrischen Antriebsmotor.

Diese elektrischen Verbraucher sind aus einem Energiespeicher, wie Ultracap, Kondensator, Batterie oder Akkumulator, versorgbar.

Über ein erfindungsgemäßes Ladesystem ist dem Energiespeicher berührungslos Energie zuführbar. Hierzu ist am Rahmen 1 des Fahrzeugs, insbesondere Zweirades, insbesondere Fahrrades, ein Aufnahmeeinrichtung 3 befestigt, welches eine Sekundärwicklung 2 aufweist.

Zum Beladen ist das Fahrzeug derart geparkt, dass das Hinterrad in einer Mulde 4 im Boden abgestellt ist. Dabei ist im Bodenmaterial eine Energiequelle 6 angeordnet, die eine Primärleiterwicklung aufweist. In den Primärieiter 23 wird ein mittelfrequenter Strom eingeprägt von einer Einspeisevorrichtung, wobei vorzugswiese eine Frequenz zwischen 10 und 500 kHz verwendet wird.

Das Hinterrad weist eine Felge 21 auf, die aus elektrisch leitfähigem Material, insbesondere Aluminium oder einem Stahl, gefertigt ist. Außerdem ist die Felge 21 hohl ausgeführt. Die Felge 21 als ringförmiges Teil am Umfang des Hinterrades vorgesehen.

Die Felge 21 ist zwar mittels Speichen 20 an der Nabe vorgesehen, jedoch ist die elektrische Verbindung zwischen Speichen 20 und Felge 21 schlecht ausgeführt. Vorzugsweise wird zur weiteren Vergrößerung des elektrischen Übergangswiderstandes ein zusätzliches Isoliermittel zwischengeordnet.
Die Felge 21 trägt an ihrem äußeren Umfang einen Reifen 22, der vorzugsweise aus gummiertem Material oder einem sonstigen Kunststoff besteht.

Mittels der im Boden angeordneten Primärleiterwicklung 23 beziehungsweise Primärleitung 23, insbesondere Primärwicklung, wird ein wechselndes Magnetfeld in dem Spulenkern 6 erzeugt, das durch die Erhebung 31 am Spulenkern in den Luftspalt geleitet wird, der zur benachbarten Erhebung 31 des Spulenkerns 6 führt. Der Spulenkern ist mit Ausnahme der Erhebungen 31 U-förmig. Die Erhebungen sind an der dem jeweils anderen Schenkel des Spulenkerns zugewandten Seite des Schenkels angeordnet.

Bei geeigneter Parkposition, also insbesondere Abstellen des Hinterrades im Tiefpunkt der Mulde, ist die Felge im Innenbereich des U-förmigen Spulenkerns 6 und/oder im Luftspalt zwischen den Erhebungen des U-förmigen Spulenkerns 6 angeordnet. Die Felge als elektrischer Leiter ist somit induktiv gekoppelt mit einer Sekundärwicklung 33.

Auf diese Weise ist im Hinterrad, insbesondere in der in Umfangsrichtung des Hinterrades ringförmig ausgeführten elektrisch leitfähigen Felge 21, ein Strom induziert, der somit in Umfangsrichtung beziehungsweise entgegen der Umfangsrichtung in der Felge 21 fließt.

Am Rahmen des Fahrzeugs ist eine Aufnahmeeinrichtung 3 angeordnet, welche eine Sekundärwicklung 33 aufweist, die um einen Spulenkern 36 herum gewickelt vorgesehen ist. Der Spulenkern 36 ist vorzugsweise U-förmig oder zumindest im Wesentlichen U-förmig ausgeführt und von einem Gehäuse 35 des Aufnahmeteils umgeben.

An den Innenseiten der Schenkel des U-förmigen Spulenkerns, also an der dem jeweiligen anderen Schenkel zugewandten Seite eines Schenkels des U sind Erhebungen 31 vorgesehen, um den Luftspalt zu verringern und die Feldführung zu verbessern - wie auch bei den Erhebungen des Spulenkerns 6.

Die Felge als elektrischer Leiter ist induktiv gekoppelt mit einer Sekundärwicklung 33. Die Felge 21 ist vorzugsweise aus ferromagnetischem Material. Hierdurch lässt sich der Luftspalt für das von der Primärleiterwicklung 23 erzeugte magnetische Hauptfeld verringern und somit die induktive Kopplung zwischen Primärleiterwicklung und Felge verstärken. Dadurch steigt auch der Wirkungsgrad.

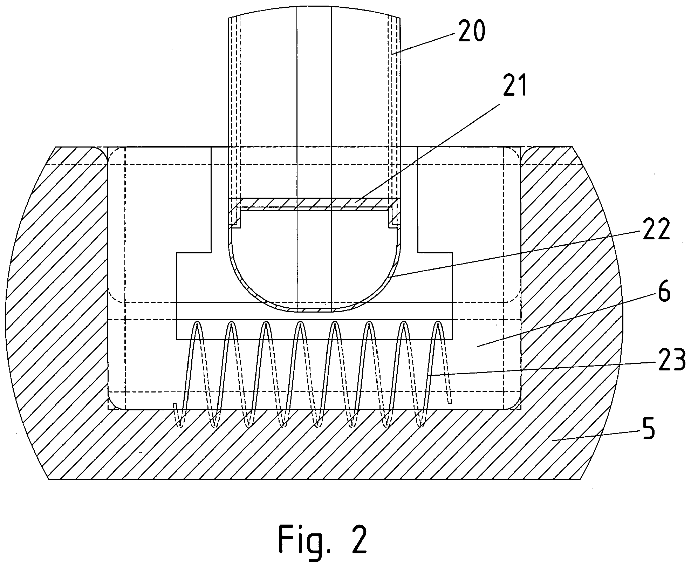

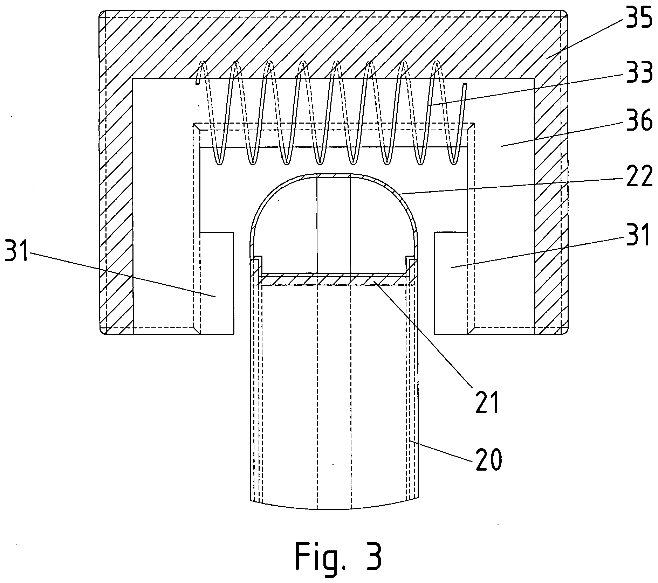

Vorzugsweise ist die Felge 21 im Zwischenbereich zwischen den Erhebungen 31 nach Figur 3 und auch zwischen den Erhebungen des Spulenkerns 6 nach Figur 2 angeordnet. Somit ist ein Optimum erreicht, insbesondere da dann das ferromagnetische und elektrisch leitfähige Felgenmaterial im Beriech der kürzesten Verbindungswege der jeweiligen Erhebungen angeordnet ist.

Durch die dünnwandige Ausführung der Felge ist auch das Auftreten von Wirbelstromverlusten reduziert. Hierzu ist die Wandstärke der Felge kleiner als 7 Millimeter, insbesondere kleiner als 4 Millimeter, gewählt.

Der in Umfangsrichtung am Hinterrad in der Felge fließende Wechselstrom induziert in der Sekundärwicklung 33 eine Spannung, so dass ausgangsseitig ein Wechselstrom zur Verfügung gestellt ist.

Zur Beladung des Energiespeichers wird der Wechselstrom gleichgerichtet. Aus dem Energiespeicher und/oder aus dem Aufnahmeteil sind die anderen Verbraucher, insbesondere auch ein als Antrieb des Fahrzeugs fungierender Elektromotor, versorgbar.

Der Sekundärwicklung ist eine Kapazität derart in Reihe oder parallel zugeschaltet, dass die zugehörige Resonanzfrequenz im Wesentlichen der Frequenz des Wechselstroms im Primärleiter zur Energieversorgung entspricht. Auf diese Weise ist ein hoher Wirkungsgrad erreichbar.

Zusätzlich zur für die Energieversorgung vorgesehenen Wechselstrom ist auch ein zusätzlicher höher frequenter Wechselstromanteil aufmodulierbar, so dass Daten übertragbar sind. Vorzugsweise werden hierbei Frequenzen ab 100 kHz oder ab 500 kHz verwendet, wobei die Frequenz stets höher gewählt wird als die für die Energieversorgung, also Leistungsversorgung, gewählte Frequenz. Aus der Sekundärwicklung 33 beziehungsweise aus dem mittels Sekundärwicklung 33 und der Kapazität gebildeten Schwingkreis ist eine Ladeelektronik des Fahrzeugs versorgbar, die zumindest einen Gleichrichter aufweist. Vorzugsweise weist die Ladeelektronik auch einen Regler auf, der den Energiespeicher stromgeregelt auflädt, solange die gespeicherte Energiemenge unterhalb eines kritischen Wertes ist, und nach Überschreiten des kritischen Wertes spannungsgeregelt.

Die Felge ist aus derartigem Material und derart geformt, dass auch eine Übertragung solch hoher Frequenzen verlustarm ausführbar ist. Hierzu ist vorzugsweise eloxiertes Aluminium gewählt.

Auf diese Weise sind also Daten austauschbar. Insbesondere sind somit Daten zur Identifikation des Fahrzeugs übertragbar, so dass das Fahrzeug von der Einspeisevorrichtung identifizierbar ist und daraufhin die elektrische Leistung freigebbar ist. Mittels der Identifikationsdaten ist eine Rechnungserstellung und Rechnungsübermittelung zur Abrechnung der ans Fahrzeug gelieferten Energiemenge ausführbar.

Außerdem ist vor Freigeben der elektrischen Leistung zur Energieversorgung mittels des Datenübertragungskanals zunächst erst einmal das Vorhandensein des Fahrzeugs detektierbar. Hierzu wird mittels Einprägung eines Testsignals in den Primärleiter 23 und Erfassung der entsprechenden Strom- und Spannungsverläufe eine Bestimmung der Induktivität der Primärleiterwicklung 23 ausgeführt. Wenn sich nun die Induktivität bei Einparken des Fahrzeugs um einen kritischen Betrag ändert, wird dies als Erkennung eines Fahrzeugs ausgewertet.

### In einem weiteren erfindungsgemäßen Ausführungsbeispiel

### Bezugszeichenliste

1 Rahmen des Fahrzeugs, insbesondere Zweirades, insbesondere Fahrrades
2 Sekundärwicklung
3 Aufnahmeeinrichtung
4 Mulde
5 Bodenmaterial
6 Energiequelle, insbesondere Primärleiterwicklung
20 Speiche
21 Felge
22 Reifen
23 Primärleitung, insbesondere Primärwicklung
31 Erhebung am Spulenkern
33 Sekundärwicklung
35 Gehäuse
36 Spulenkern

## Patentansprüche

1. Vorrichtung zum berührungslosen Übertragen von Energie an ein Fahrzeug,
wobei ein Primärleiter induktiv gekoppelt zu einem ringförmigen Teil des Fahrzeugs angeordnet ist, wobei das ringförmige Teil drehbar gelagert am Fahrzeug, insbesondere an dessen Rahmen, ist,
wobei am Fahrzeug eine Sekundärwicklung induktiv gekoppelt zu dem ringförmigen Teil angeordnet ist,
wobei in Umfangsrichtung des ringförmigen Teils zwischen dem Bereich der induktiven Kopplung an den Primärleiter und dem Bereich der induktiven Kopplung an die Sekundärwicklung mehr als 90° Umfangswinkel vorgesehen ist
wobei das ringförmige Teil die Felge eines Rades des Fahrzeugs ist
wobei der Primärleiter um einen Spulenkern gewickelt ist und wobei die Sekundärwicklung um einen Spulenkern gewickelt ist, **dadurch gekennzeichnet, dass**
der Spulenkern U-förmig ist,
wobei das ringförmige Teil mittels einer Mulde im Zwischenbereich zwischen den Schenkeln des U-förmigen, vom Primärleiter umwickelten Spulenkerns, insbesondere zwischen den an den Schenkeln vorgesehenen Erhebungen, positioniert ist.

2. Vorrichtung nach Anspruch 1,
**dadurch gekennzeichnet, dass**
das Rad das Hinterrad des Fahrzeugs ist.

3. Vorrichtung nach mindestens einem der vorangegangenen Ansprüche,
**dadurch gekennzeichnet, dass**
die Schenkel des U an ihren zueinander zugewandten Seitenflächen jeweils Erhebungen aufweisen.

4. Vorrichtung nach mindestens einem der vorangegangenen Ansprüche,
**dadurch gekennzeichnet, dass**
das ringförmige Teil aus einem elektrisch leitfähigen und ferromagnetischem Material bestehen.

5. Vorrichtung nach mindestens einem der vorangegangenen Ansprüche,
**dadurch gekennzeichnet, dass**
das Fahrzeug zumindest ein Rad aufweist, das das ringförmige Teil aufweist.

6. Vorrichtung nach mindestens einem der vorangegangenen Ansprüche,
**dadurch gekennzeichnet, dass**
das ringförmige Teil derart dünnwandig ist, dass seine Wandstärke in zu den Schenkeln paralleler Richtung kleiner als ein Fünftel, insbesondere kleiner als ein Zehntel, der Wandstärke in Achsrichtung des das ringförmige Teil umfassenden Rades des Fahrzeugs ist, insbesondere also in Verbindungsrichtung der Schenkel, insbesondere in Verbindungrichtung der Erhebungen.

7. Vorrichtung nach mindestens einem der vorangegangenen Ansprüche,
**dadurch gekennzeichnet, dass**
die Felge mittels Speichen an einer am Fahrzeug, insbesondere am Rahmen des Fahrzeugs, drehbar gelagerten Nabe gehalten ist.

8. Vorrichtung nach mindestens einem der vorangegangenen Ansprüche,
**dadurch gekennzeichnet, dass** die Mulde im Boden angeordnet ist, und der Primärleiter samt Spulenkern derart angeordnet ist, dass bei Positionieren eines das ringförmige Teil aufweisenden Rades des Fahrzeuges in der Mulde eine stärkere induktive Kopplung zwischen dem Primärleiter und dem ringförmigen Teil erreicht wird als beim Positionieren des Rades außerhalb der Mulde.

9. Vorrichtung nach mindestens einem der vorangegangenen Ansprüche,
**dadurch gekennzeichnet, dass**
das ringförmige Teil zweistückig ausgeführt ist, indem ein ferromagnetischer Ring mit einer ringförmigen und/oder kreisförmigen elektrischen Leiterschleife, insbesondere Kupferleitung, verbunden ist.

## Claims

1. A device for non-contact transmission of energy to a vehicle,
wherein a primary conductor is arranged inductively coupled with an annular part of the vehicle,
wherein the annular part is rotatably mounted on the vehicle, in particular on its frame,
wherein at the vehicle there is arranged a secondary winding inductively coupled with the annular part,
wherein in the circumferential direction of the annular part there is provided a circumferential angle greater than 90° between the region of the inductive coupling to the primary conductor and the region of the inductive coupling to the secondary winding,
wherein the annular part is the rim of a wheel of the vehicle,
wherein the primary conductor is wound around a coil core and wherein the secondary winding is wound around a coil core,
**characterised in that**
the coil core is U-shaped,
wherein the annular part is positioned, by means of a trough, in the intermediate region between the limbs of the U-shaped coil core wound around by the primary conductor, in particular between the protuberances provided on the limbs.

2. A device according to claim 1,
**characterised in that**
the wheel is the rear wheel of the vehicle.

3. A device according to at least one of the preceding claims,
**characterised in that**
the limbs of the U each have protuberances at their facing lateral faces.

4. A device according to at least one of the preceding claims,
**characterised in that**
the annular part is composed of an electrically conductive and ferromagnetic material.

5. A device according to at least one of the preceding claims,
**characterised in that**
the vehicle has at least one wheel which has the annular part.

6. A device according to at least one of the preceding claims,
**characterised in that**
the annular part is thin-walled to such an extent that its wall thickness in a direction parallel to the limbs is less than one fifth, in particular less than one tenth, of the wall thickness in an axial direction of the vehicle wheel comprising the annular part, in particular therefore in the connecting direction of the limbs, in particular in the connecting direction of the protuberances.

7. A device according to at least one of the preceding claims,
**characterised in that**
the rim is held, by means of spokes, on a hub rotatably mounted on the vehicle, in particular on the frame of the vehicle.

8. A device according to at least one of the preceding claims,
**characterised in that**
the trough is arranged in the ground,
and the primary conductor together with coil core is arranged in such a manner that upon positioning of a vehicle wheel, having the annular part, in the trough there is achieved a stronger inductive coupling between the primary conductor and the annular part than upon positioning of the wheel outside of the trough.

9. A device according to at least one of the preceding claims,
**characterised in that**
the annular part is two-part **in that** a ferromagnetic ring is connected to an annular and/or circular, electric conductor loop, in particular copper wire.

## Revendications

1. Dispositif de transfert d'énergie sans contact à un véhicule,
un conducteur primaire étant couplé inductivement à une partie annulaire dudit véhicule, ladite partie annulaire étant montée à rotation sur ledit véhicule, notamment sur le cadre de ce dernier,
un enroulement secondaire étant couplé inductivement à ladite partie annulaire, sur ledit véhicule,
un angle circonférentiel supérieur à 90° étant prévu dans la direction du pourtour de ladite partie annulaire, entre la région du couplage inductif avec ledit conducteur primaire et la région du couplage inductif avec ledit enroulement secondaire,
ladite partie annulaire étant la jante d'une roue dudit véhicule,
ledit conducteur primaire étant enroulé autour d'un noyau de bobine, et ledit enroulement secondaire étant enroulé autour d'un noyau de bobine,
**caractérisé par le fait que**
le noyau de bobine est configuré en U,
la partie annulaire étant positionnée, au moyen d'une creusure, dans la région intermédiaire située entre les branches dudit noyau de bobine configuré en U et entouré par le conducteur primaire, en particulier entre les protubérances prévues sur lesdites branches.

2. Dispositif selon la revendication 1,
**caractérisé par le fait que**
la roue est la roue arrière du véhicule.

3. Dispositif selon au moins l'une des revendications précédentes,
**caractérisé par le fait que**
les branches du U sont respectivement pourvues de protubérances sur leurs faces latérales placées en vis-à-vis mutuel.

4. Dispositif selon au moins l'une des revendications précédentes,
**caractérisé par le fait que**
la partie annulaire consiste en un matériau ferromagnétique et électriquement conducteur.

5. Dispositif selon au moins l'une des revendications précédentes,
**caractérisé par le fait que**
le véhicule est muni d'au moins une roue comportant la partie annulaire.

6. Dispositif selon au moins l'une des revendications précédentes,
**caractérisé par le fait que**
la partie annulaire présente une paroi d'une minceur telle que, dans une direction parallèle aux branches, son épaisseur de paroi soit inférieure à un cinquième, en particulier inférieure à un dixième de l'épaisseur de paroi dans la direction axiale de la roue du véhicule incluant ladite partie annulaire, c'est-à dire notamment dans la direction de la liaison des branches, en particulier dans la direction de la liaison des protubérances.

7. Dispositif selon au moins l'une des revendications précédentes,
**caractérisé par le fait que**
la jante est retenue, au moyen de rayons, sur un moyeu monté à rotation sur le véhicule, en particulier sur le cadre dudit véhicule.

8. Dispositif selon au moins l'une des revendications précédentes,
**caractérisé par le fait que**
la creusure est pratiquée dans le sol
et le conducteur primaire occupe, conjointement au noyau de bobine, un emplacement propre à instaurer entre ledit conducteur primaire et la partie annulaire, lorsqu'une roue du véhicule incluant ladite partie annulaire est positionnée dans la creusure, un couplage inductif plus fort que lorsque ladite roue est positionnée à l'extérieur de ladite creusure.

9. Dispositif selon au moins l'une des revendications précédentes,
**caractérisé par le fait que**
la partie annulaire est réalisée en deux éléments, un anneau ferromagnétique étant connecté à une boucle électrique conductrice annulaire et/ou circulaire, en particulier à un conducteur en cuivre.
